# EUROPEAN PATENT APPLICATION

(11) **EP 4 683 297 A1**
(43) Date of publication of application: **21.01.2026**
(21) Application number: 24778937.3
(22) Date of filing: 26.02.2024
(51) Int. Cl.: H04L 51/02, G06F 16/90

(54) **INFORMATION PROCESSING DEVICE, INFORMATION PROCESSING METHOD, AND PROGRAM**

(30) Priority: 28.03.2023 JP 2023051849
(71) Applicant: Helpfeel Inc., Kyoto-shi, Kyoto, 602-0023 (JP)
(72) Inventor: TERAMOTO Daiki, Kyoto-shi, Kyoto 602-0023 (JP)
(74) Representative: Ström & Gulliksson AB
(86) International application number: PCT/JP2024/006827
(87) International publication number: WO 2024/202795

(57) **Abstract**

The present invention makes it possible for a user to easily find a desired target text or the like through a chat and obtain an appropriate answer based on the target text or the like. A question sentence candidate extraction unit 103 extracts one or more question sentence candidates including, in at least a part thereof, a keyword accepted by a keyword or the like acceptance unit 102. A question sentence candidate presentation unit 104 presents the extracted one or more question sentence candidates to a user. A related text or the like presentation unit 106 extracts, from a question sentence dictionary DB 181, a target text or the like associated with one selected from among the one or more question sentence candidates, and presents the extracted target text or the like to the user. A chat type UI control unit 109 controls transfer of information between the keyword or the like acceptance unit 102 to the related text or the like presentation unit 106 and a chatbot, thereby causing the chatbot to generate an answer based on the related text or the like to be presented to a text inputted by the user.

## Description

### TECHNICAL FIELD

The present invention relates to an information processing device, an information processing method, and a program.

### BACKGROUND ART

There is a technique related to what is called a FAQ search service allowing a search of information related to combinations of typical questions and answers, as an ancillary service for supporting users who receive products and services (e.g., Patent Document 1).

### Citation List

### Patent Document

Patent Document 1: Japanese Unexamined Patent Application, Publication No. 2015-056014

### DISCLOSURE OF THE INVENTION

### Problems to be Solved by the Invention

Unfortunately, even if conventional FAQ search services including the technique in Patent Document 1 execute a search with a keyword that a typical user can come up with, no desired search result is hit, and no desired target text or the like of the user is reached in many cases. Too many hits often prevent a desired target text or the like from being reached. Specifically, for example, in a case of a FAQ search service of an insurance product, executing a search with a keyword "update" displays an overwhelming number of search results, which makes it difficult to reach a desired target text or the like. On the other hand, even if a conventional chatbot is simply utilized, it is difficult for a user to reach a desired target text or the like.

The present invention has been made in view of such situations, and has an object to allow a user to easily reach a desired target text or the like through a chat and to obtain an appropriate answer based on the target text or the like. Means for Solving the Problems

To achieve the object described above, an information processing device of an aspect of the present invention includes:
acceptance unit for accepting, as a target text or the like, a word related to the target text or the like that is a prescribed word, phrase, or text to be presented to a user to achieve a predetermined object of the user;
extraction unit for extracting one or more guidance sentence candidates that at least partially include the word or a word similar thereto from a guidance sentence dictionary in which a plurality of guidance sentence candidates intended by the user to reach the target text or the like are preregistered in association with the target text or the like;
first presentation unit for presenting, to the user, the one or more guidance sentence candidates extracted by the extraction unit;
second presentation unit for extracting the target text or the like associated with the selected guidance sentence candidate among the one or more guidance sentence candidates presented to the user by the first presentation unit, from the guidance sentence dictionary, and for presenting the extracted target text or the like to the user; and
chat control unit for causing a chatbot to execute control to chat with the user, and for controlling transfer of information between the acceptance unit to the second presentation unit and the chatbot to thereby cause the chatbot to generate an answer based on the target text or the like that is a presentation target by the second presentation unit, in response to a text input by the user.

An information processing method and a program that are aspects of the present invention respectively indicate a method and a program that correspond to the information processing device of the aspect of the present invention.

### Effects of the Invention

The present invention can allow the user to easily reach a desired target text or the like through a chat and to obtain an appropriate answer based on the target text or the like.

### BRIEF DESCRIPTION OF THE DRAWINGS

FIG. 1 is a diagram showing an overview of a present service implementable by an information processing system to which a server according to one embodiment of an information processing device in the present invention is applied;
FIG. 2 is a diagram showing the overview of the present service implementable by the information processing system to which the server according to one embodiment of the information processing device in the present invention is applied;
FIG. 3 is a diagram showing the overview of the present service implementable by the information processing system to which the server according to one embodiment of the information processing device in the present invention is applied;
FIG. 4 is a diagram showing the overview of the present service implementable by the information processing system to which the server according to one embodiment of the information processing device in the present invention is applied;
FIG. 5 is a diagram showing the overview of the present service implementable by the information processing system to which the server according to one embodiment of the information processing device in the present invention is applied;
FIG. 6 is a diagram showing an example of the configuration of the information processing system to which the server according to one embodiment of the information processing device in the present invention is applied;
FIG. 7 is a block diagram showing an example of the hardware configuration of the server in the information processing system shown in FIG. 6;
FIG. 8 is a functional block diagram showing an example of a functional configuration of the server in FIG. 7 included in the information processing system in FIG. 6;
FIG. 9 is a diagram showing an example of a search at a FAQ search site according to a conventional approach;
FIG. 10 is a diagram illustrating a concept of intent development in the present service;
FIG. 11 is a diagram showing an example of guidance for a user achieved by the intent development of the present service;
FIG. 12 is a diagram showing an example of guidance for the user achieved by the intent prediction of the present service;
FIG. 13 is a diagram showing an example of presenting question sentence candidates in the present service;
FIG. 14 is a diagram showing an example of the user selecting the question sentence candidate in the present service; and FIG. 15 is a functional block diagram that shows an example of a functional configuration of the server in FIG. 8 included in the information processing system in FIG. 6 and is different from the example in FIG. 8.

### PREFERRED MODE FOR CARRYING OUT THE INVENTION

Embodiments of the present invention are described below with reference to the drawings.

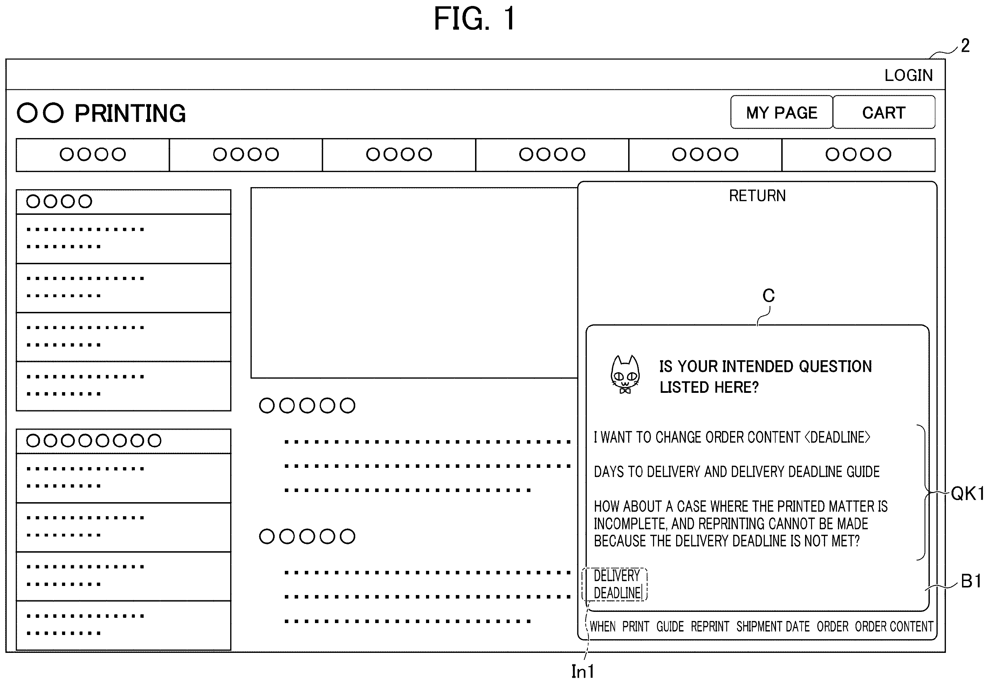

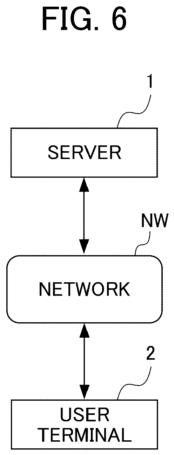

First, referring to FIGS. 1 to 5, an overview of a service (hereinafter called "present service") implementable by an information processing system (see FIG. 6 described later) to which a server according to one embodiment of the present invention is applied is described.

FIGS. 1 to 5 are diagrams showing the overview of the service (hereinafter called "present service") implementable by the information processing system to which the server according to one embodiment of the information processing device in the present invention is applied.

The present service adopts a predetermined word, phrase, or text presented to the user to achieve a predetermined purpose of the user, as a target text or the like, and assists the user in easily reaching the target text or the like using a chat-type UI (User Interfase). The target text or the like may have any content (piece of content) as long as it is presented to the user to achieve the predetermined purpose of the user. The description is made below assuming that the target text or the like is a text (piece of writing) that includes a FAQ and its answer. Such a target text or the like is called a related text or the like as appropriate. That is, the description is made assuming that the present service is a service that provides a search function for a FAQ search site, and the like.

As shown in FIG. 1, the user operates an information processing device 2 (hereinafter called "user terminal 2"), such as a smartphone, accesses a website provided by the present service, and pops up a chat-type UI screen C if they intend to ask a question related to the website to receive its answer. The user can input a question in an input field B1 on the chat-type UI screen C. The input field B1 allows any text (natural sentence) to be input. Note that the user often has difficulty determining what text to be entered as an input. Accordingly, the user often inputs a word In1 related to the content of a question that they intend to ask, in the first place. For example, it is assumed that a website in FIG. 1 relates to a service for mailing predetermined deliverables (e.g., business cards and printed postcards) to the user by a predetermined delivery deadline, the user accesses the website today, Thursday, hopes that the ordered deliverables will arrive on Saturday, and hopes to know whether the deliverables will arrive on Saturday or not in response to an order placed now. In this case, it is assumed that the user enters a word In1 "delivery deadline" as a word that they come up with in the input field B1 on the chat-type UI screen C. According to the present service, by an incremental search using an intent prediction search, even from the short word In1 such as "delivery deadline", one or more predicted question sentence candidates QK1 are quickly displayed on the chat-type screen C. The example in FIG. 1 assumes that an answer to the user is created from an answer to a FAQ. Accordingly, the predicted FAQ is presented as the question sentence candidate QK1 from the word In1 that is "delivery deadline". Below the input field B1, there are displayed one or more keywords related to the input (in the example in FIG. 1, the word In1 that is "delivery deadline") in the input field B1 to assist an input of a further appropriate question by the user.

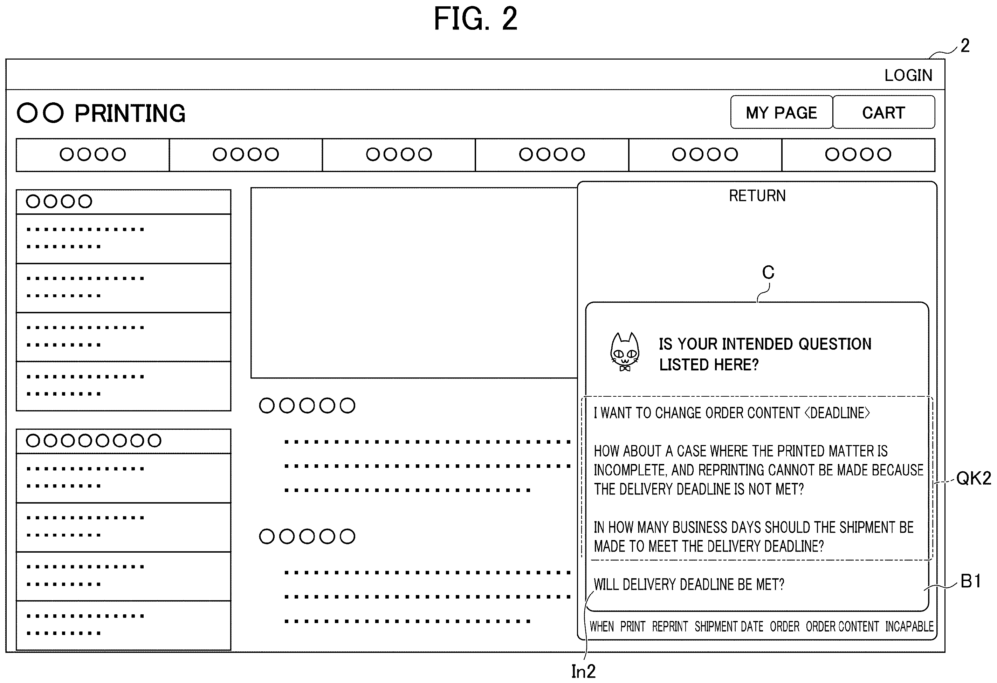

Next, as shown in FIG. 2, it is assumed that the user subsequently, continuously inputs a text In2 "Will delivery deadline be met?" in the input field B1 on the chat-type UI screen C. In this case, according to the present service, more appropriate question sentence candidates QK2, specifically, several question sentence candidates QK2 such as "In how many business days should the shipment be made to meet the delivery deadline?" are quickly displayed on the chat-type screen C. Although not shown, when the user clicks, for example, a question sentence candidate QK2 such as "In how many business days should the shipment be made to meet the delivery deadline?" among the several question sentence candidates QK2, a page where an answer to the FAQ corresponding to the clicked question sentence candidate QK2 is included (hereinafter called "FAQ page") opens. At this time, in the present service, the question and answer to the FAQ related to the FAQ page are temporarily stored, and can be reflected in answers to subsequent users. In other words, in information exchange with the user on the chat-type UI screen C, the context can be maintained.

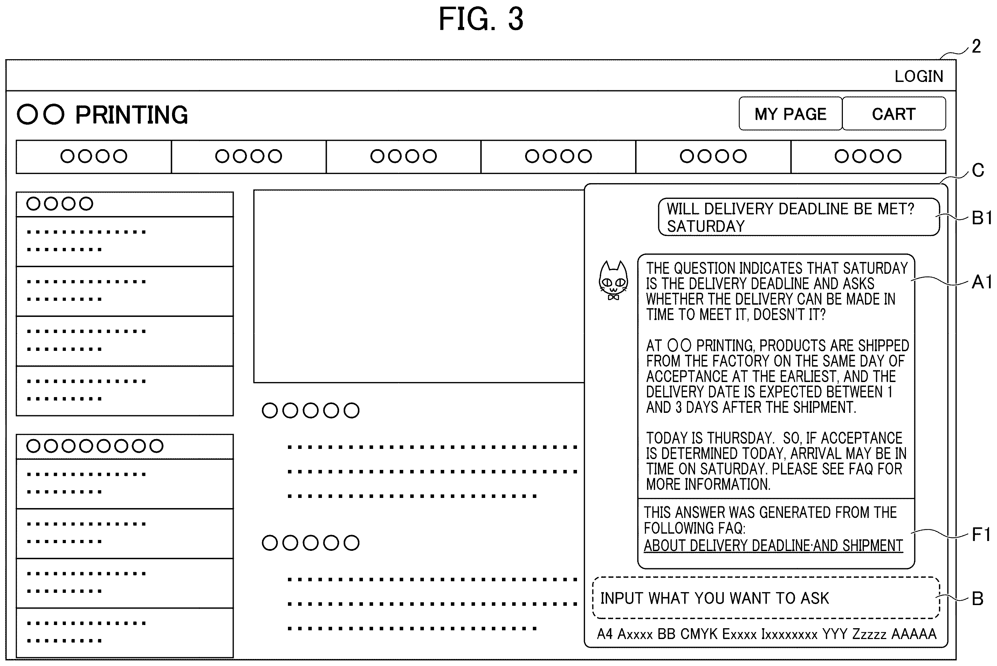

Next, it is assumed that the user subsequently inputs "Will delivery deadline be met? Saturday" and presses the enter key. Accordingly, the input through the chat-type UI is determined. As shown in FIG. 3, the input field B1 of the user is displayed as a chat history, and an answer A1 from the chatbot is displayed. The answer A1 is generated by the chatbot to which an algorithm obtained by enhancing the conventional intent prediction search is applied using machine learning, and is specifically as follows. That is, the following answer A1 is displayed:
"The question indicates that Saturday is the delivery deadline and asks whether the delivery can be made in time to meet it, doesn't it? At OO Printing, products are shipped from the factory on the same day of acceptance at the earliest, and the delivery date is expected between 1 and 3 days after the shipment. Today is Thursday. So, if acceptance is determined today, arrival may be in time on Saturday. Please see the FAQ for more information."
Below the answer, the following reference information F1 is displayed:
"This answer was generated from the following FAQ:
[About delivery deadline and shipment]".
Here, the reference information F1 indicates the reference of the FAQ page that serves as an information source. As described above, according to the answer A1 using the chat-type UI screen C in the present service, not only a list of links to related pieces of writing (pages on which content related to the answer to the question by the user appears) is simply presented, but also the gist of the answer summarized in a natural sentence is added. When creating such an answer A1, the chatbot creates a text with consciousness of "echoing" that is a method of intent prediction search as much as possible to reduce the burden of visual verification of search result appropriateness. In this example, the user asks "will it be in time for Saturday?". Accordingly, echoing representation "might be made in time on Saturday" is included at the end of the gist of answer of the answer A1.

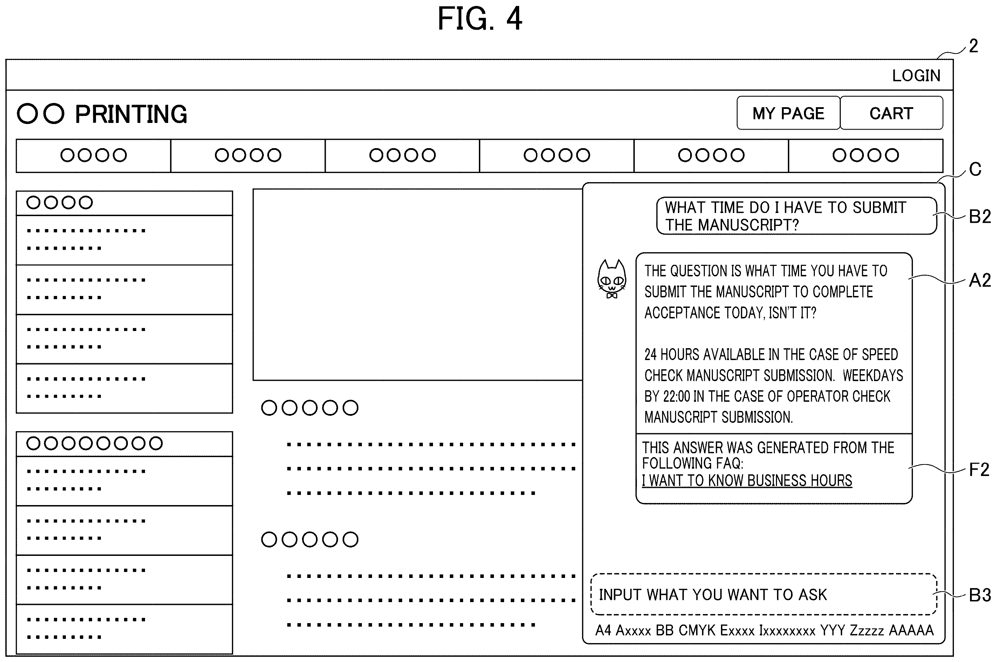

Next, it is assumed that the user inputs "What time do I have to submit the manuscript?" in the input field B on the chat-type UI screen C in FIG. 3, and the enter key is pressed. Accordingly, the input by the chat-type UI is determined. As shown in FIG. 4, the input field B2 in which "What time do I have to submit the manuscript?" is input is displayed as the chat history. The answer A2 from the chatbot is displayed. Since the question and answer (see FIGS. 1 to 3) described above are stored, the chatbot considers the assumption "Acceptance needs to be completed today", and creates the answer A2 by an algorithm obtained by enhancing the conventional intent prediction search, using machine learning. Specifically, the following answer A2 is displayed:
"The question is what time you have to submit the manuscript to complete acceptance today, isn't it? 24 hours available in the case of speed check manuscript submission. Weekdays by 22:00 in the case of operator check manuscript submission." Below the answer, the following reference information F2 is displayed:
"This answer was generated from the following FAQ:
[About delivery deadline ·and shipment]".
Here, the reference information F2 indicates the reference of the FAQ page that serves as an information source.

Although not shown, if the user does not satisfy the answer by the chatbot, they can send it as it is as a query. That is, when no solution seems to be reached even with a certain series of conversations, a "QUERY" button is displayed on the chat-type UI screen C at the same time as the response from the chatbot arrives. When the "QUERY" button is pressed, a human customer support reads the log of conversations with the chatbot, and then the human customer support responds to it.

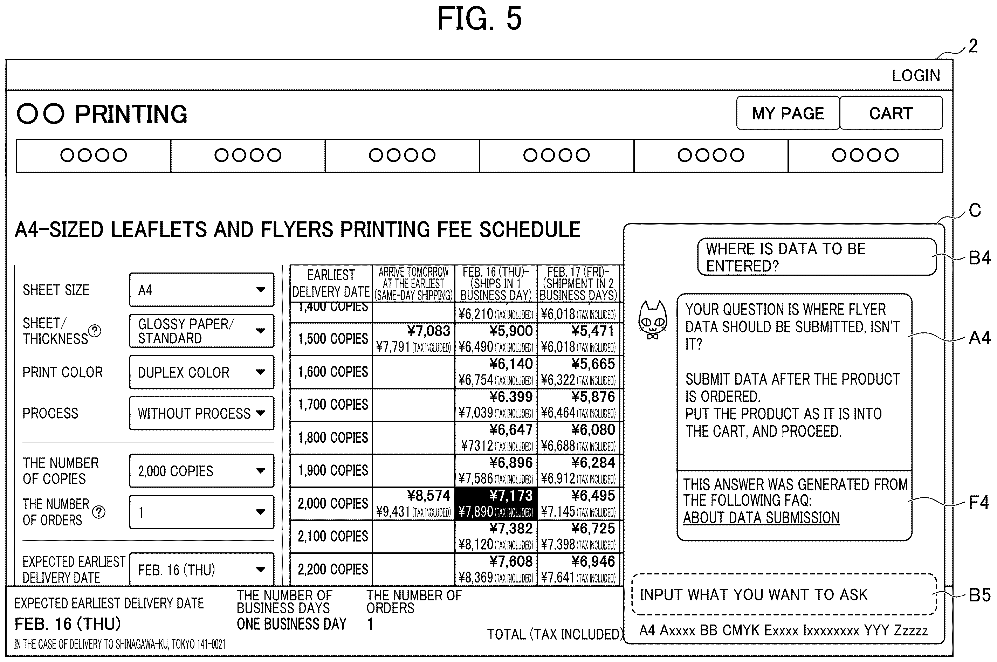

By embedding the chat-type UI screen C in the predetermined website, the chatbot can grasp the content of the open page as the context, and create an appropriate answer by an algorithm obtained by enhancing the conventional intent prediction search using machine learning. For instance, in the example in FIG. 5, it is assumed that in a state where a page "A4-sized leaflets and flyers printing fee schedule" opens, the user inputs "Where is data to be entered?" in an input field B4 on the chat-type UI screen C, and presses the enter key. Accordingly, the input through the chat-type UI is determined. As shown in FIG. 5, the input field B4 is displayed as a chat history, and an answer A4 from the chatbot is displayed. Below it, reference information F4 that indicates the reference of the FAQ page serving as an information source is also displayed. The answer A4 is created by the chatbot along the context "intent to print" based on a page "A4-sized leaflets and flyers printing fee schedule". Note that what can be used as the context by the chatbot is not limited only to the page that currently opens. Pages previously viewed by the user can also be used in a similar manner.

As described above, the chat-type UI using the chat-type UI screen C in the present service is what includes "keyword search type FAQ" developed by the present applicant, and an AI chatbot in a combined manner. Here, "keyword search type FAQ" is described.

The "keyword search type FAQ" is a method of allowing the user to quickly reach desired information (FAQ and its answer) even if the keyword input into a search window is what has high generality. Here, the "generality" of the keyword is an indicator indicating the width of range of meaning that can be evoked by the keyword itself. The keyword with high generality has a wide range of meaning that can be evoked by the keyword itself. The keyword with low generality has a narrow range of meaning that can be evoked by the keyword itself.

In a specific example, for instance, a problem that the overtime work lasts until midnight, a terminal in the company used by one user left in the company cannot be connected to the Internet is assumed to occur. In such a case, the user uses "keyword search type FAQ", intends to quickly reach FAQ to solve the problem, inputs a conceivable keyword into the search window, and executes a search.

For example, it is assumed that the user inputs a keyword "inaccessible" into the search window, and executes a search. A state where a certain entity is not connected to what should be originally connected in any mode can be evoked based on the keyword "inaccessible". However, only with the keyword "inaccessible", it cannot be specifically evoked which entity is not connected to others and in which mode. That is, the keyword "inaccessible" is an example of a keyword with high generality.

It is herein assumed that the user uses the conventional FAQ search service, and searches with the keyword "inaccessible". In this case, many FAQ candidates that partially include the keyword "inaccessible" are displayed as a search result. Note that this search result includes many FAQs that are not related to Internet connection. Accordingly, it is difficult to reach the FAQ desired by the user.

For example, it is assumed that the user inputs a keyword "Internet" into the search window, and executes a search. From the keyword "Internet", a concept of what is called the Internet can be evoked. However, only with the keyword "Internet", specific content on what happens with the Internet cannot be evoked. That is, the keyword "Internet" is an example of a keyword with high generality. It is herein assumed that the user uses the conventional FAQ search service, and searches with the keyword "Internet". In this case, many FAQ candidates that partially include the keyword "Internet" are displayed as a search result. Note that this search result includes many FAQs that are not related to Internet connection. Accordingly, it is difficult to reach the FAQ desired by the user.

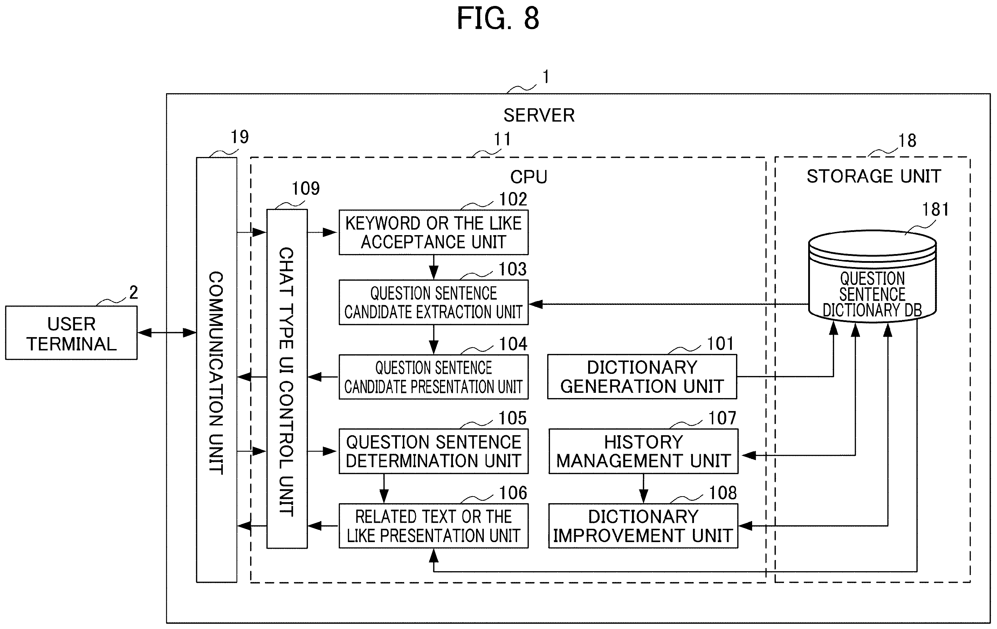

On the other hand, through use of "keyword search type FAQ" is used, upon input of a keyword with high generality into a search window B, one or more FAQ (question sentence) candidates (hereinafter called "question sentence candidates") that at least partially include the keyword are displayed first. Multiple question sentence candidates are preliminarily generated, stored in a predetermined database (e.g., an after-mentioned question sentence dictionary DB 181 in FIG. 8) in a searchable and extractable manner, and managed.

Specifically, for example, although not shown, upon input of a keyword with high generality "inaccessible" into the search window, a question sentence candidate "inaccessible to wireless in-company network" is displayed. For example, upon input of a keyword with high generality "Internet" into the search window, a question sentence candidate "How to connect to the in-company network" is displayed. Note that in this example, only one question sentence candidate is displayed in each case. This is for convenience's sake of simplifying the description. It is a matter of course that two or more question sentence candidates may be displayed.

When a question sentence candidate desired by the user is selected from among the displayed one or more question sentence candidates, the screen transitions. One or more texts (hereinafter called "related text or the like") that include FAQs having a predetermined relationship with the keyword input by the user and their answers are displayed. Note that it is not specifically limited how to define "relationship" in "keyword search type FAQ" (including the chat-type UI in the present service). The definition may be freely made by a service provider. The keywords whose mutual relationship are admitted by the service provider, question sentence candidates, related text or the like are associated with each other, and the question sentence dictionary is generated. That is, the related texts or the like managed in association with keywords in the question sentence dictionary are treated assuming that the keywords have "relationship". The question sentence dictionary is stored in the predetermined database (e.g., the after-mentioned question sentence dictionary DB 181 in FIG. 5) in a searchable and extractable manner, and managed.

Specifically, for example, although not shown, when the question sentence candidate "inaccessible to wireless in-company network" is selected by the user, the following indication is displayed as the related text or the like having the relationship with the keyword "inaccessible" input by the user. That is, a FAQ "connecting to in-company Wi-Fi", and an answer to the FAQ "You can connect to the in-company Wi-Fi network with the following ID.
• SSID:XXXX • Password: XXXX Don't disclose it to anyone outside the company."
and
a related text or the like including supplementary information "Please contact us if there is any problem with connection. supplementary information [Contact name] Kaneko, OO, Information system division"
are displayed.
Accordingly, the user can quickly solve the problem of incapability of connection to the Internet, by referring to the displayed related text or the like.

For example, although not shown, if the question sentence candidate "How to connect to the in-company network" is selected by the user, the same indication is displayed as the related text or the like having the relationship with the keyword "Internet" input by the user. That is, with a focus on the relationship between the keyword and the related text or the like, even if the user inputs the keyword "inaccessible" or inputs the keyword "Internet", the same related text or the like is readily presented, and the problem of incapability of connection to the Internet can be quickly solved.

Accordingly, with "keyword search type FAQ", upon input of the keyword into the search window, one or more question sentence candidates that at least partially include the keyword are displayed. When one question sentence candidate is selected from among them, the related text or the like that includes the FAQ related to the keyword and its answer is displayed. Accordingly, the user can easily reach the desired FAQ and its answer.

Here, two remarkable points are present about "keyword search type FAQ". The first one is a point that the related text or the like does not include any keyword input for a search. That is, the user can easily reach the desired FAQ only by performing a simple operation of inputting a keyword that has high generality and is easily evoked, into the search window, and selecting the displayed question sentence candidate.

The second remarkable point is a point that even if a different keyword is input into the search window, the desired identical related text or the like can be reached. In other words, the point is that multiple question sentence candidates are associated with one FAQ, and one or more different keywords are associated with each of these question sentence candidates. That is, if the user intends to obtain a desired FAQ and its answer, they are only required to input an instantly evoked keyword with high generality, and select a displayed question sentence candidate. That is, as in the example described above, if the question "incapable of connection to Internet" occurs, a keyword with high generality such as "inaccessible" or "Internet" may be input.

For the related text or the like, the "keyword search type FAQ" can display not only the FAQ desired by the user and its answer, but also a concerned party related to the answer, and an organization to which the concerned party belongs, as the supplementary information as described above. Specifically, for example, in the example described above, for the supplementary information for the FAQ and its answer, a concerned party (OO Kaneko) as [contact name] corresponding to the answer, and an organization (information system division) to which the concerned party belongs are represented. Here, each of the representation of the concerned party, and the representation of the organization to which the concerned party belongs may be representation with a simple text. Preferably, each of them is displayed in an accessible button form on a predetermined web page with detailed information. In this case, for example, when an operation (e.g., a tapping operation) of pressing the indication of the concerned party (OO Kaneko) is performed, for example, the predetermined web page with the division, phone number, email address and other detailed information (hereinafter called "detail page") is displayed. Accordingly, if the problem is not solved only with the related text or the like (only with the presented FAQ and its answer), the user can swiftly identify a person in charge, and perform a query. Accordingly, the problem can be solved promptly.

As described above, with the "keyword search type FAQ", the question sentence dictionary is managed in the predetermined database. Accordingly, when a question sentence candidate is selected, the related text or the like that includes the FAQ and its answer can be displayed in the form described above. Here, the related text or the like associated with the predetermined keyword does not necessarily include the FAQ and its answer. It is sufficient that a predetermined word, phrase, or the text is the target text or the like. For example, the related text or the like can also be displayed in the following mode.

That is, when the keyword is input into the search window, one or more question sentence candidates are displayed. The example described above is applicable so far. However, a list of related texts or the like may be displayed as "hint for wording" below the search window or the like. Specifically, for example, a keyword "address" is assumed to be input. Accordingly, "purchase", "convenience store", "up for sale", "address", "anonym", "change", and "return" are displayed as "hints for wording" (related texts or the like) corresponding to "address". The user performs an operation (e.g., a tapping operation) of selecting a desired "hint for wording" (related text or the like) from among the displayed one or more "hints for wording" (related texts or the like). Accordingly, although not shown, the related text or the like that includes the FAQ desired by the user and its answer is displayed.

The "keyword search type FAQ" is improved as appropriate. As described above, the keywords, question sentence candidates, related texts or the like are associated with each other, and are managed as the question sentence dictionary. The operation history by the user is also stored and managed as history information. That is, the keyword input into the search window by the user, the question sentence candidate selected by the user, and the related text or the like that the user has reached are managed as the history information. The history information includes information related to question sentence candidates that are not selected by the user while the question sentence candidates have been displayed through input of the keyword into the search window. The history information further includes information related to a case where the related text or the like has been displayed by selecting the question sentence candidate but it is not any text desired by the user. Specifically, for example, "keyword search type FAQ" is assumed to be adopted for a certain EC (Electronic Commerce) site. It is assumed that many users input the name of a specified payment method into the search window. In this case, although one or more question sentence candidates are displayed on the user terminals 2 of many users, these users sometimes select no question sentence candidate. No question sentence candidate is sometimes displayed. In such cases, question sentence candidates expected to be desired by many users can be estimated. Accordingly, based on the estimation result, a new question sentence candidate can be prepared. Accordingly, the "keyword search type FAQ" can be improved to be enhanced. As a result, the level of satisfaction of the user using "keyword search type FAQ" can be improved. Products and services that are desired by the user but are not provided in a case where arrival indicated by the keyword or the related text or the like included in the question sentence candidate that is not selected by the user can be found. Accordingly, it can contribute to creation of new products and new services desired by the user.

As described above, "keyword search type FAQ" provides the user with the feeling that the arrival to the target information (related text or the like) is very fast. Note that in a case where the "keyword search type FAQ" is applies as a single entity, the start point (input by the user) is "keyword", and the arrival point (output to the user) is presentation of the preliminary provided related text or the like. Accordingly, there is a problem that it is weak in text. Temporary previous content before the input "keyword" is irrelevant. Accordingly, even though "previously predetermined input" is made and the keyword related to the predetermined input is input according to a series of flow steps for the user, and the user indicates what relates to "previously", "keyword search type FAQ" cannot recognize "previously" (presents the target text or the like without considering the "previously"), which causes a weakness.

To compensate such a weakness, the present service provides the aforementioned chat-type UI which is shown in FIGS. 1 to 5 and in which "keyword search type FAQ" is combined with the AI chatbot.

Compared in terms of the conventional AI chatbot, the conventional AI chatbot forms a conversation (chat). Accordingly, to the content input by the user, the intention can be predicted, and an answer is provided, and the history of previous conversations can be considered to predict the intent. That is, the AI chatbot can resolve the weakness of the "keyword search type FAQ". On the other hand, the conventional AI chatbot has a weakness that it is unknown whether a correct result is obtained or not until transmission, and a weakness that there is a problem of hallucination, i.e., a problem in that a wrong answer and an answer irrespective of the question are generated. The "keyword search type FAQ" can present the related text or the like as a correct answer as long as the input "keyword" can be determined. Consequently, these weaknesses of the conventional AI chatbot can be resolved.

The present service then combines the "keyword search type FAQ" with the AI chatbot, thereby resolving the mutual weaknesses. Accordingly, similar to the "keyword search type FAQ", the feeling that the arrival to the target information (related text or the like) is very fast can be provided for the user, and the feeling that the chat-type UI of the present service is smart can be experienced by the user.

Next, referring to FIG. 6, the information processing system that implements the feature of providing the present service described above, i.e., the configuration of the information processing system to which the server according to one embodiment of the information processing device in the present invention is applied, is described. FIG. 6 is a diagram showing an example of the configuration of the information processing system to which the server according to one embodiment of the information processing device in the present invention is applied.

The information processing system shown in FIG. 6 has a configuration that includes a server 1 and a user terminal 2. The server 1 and the user terminal 2 are connected to each other via a predetermined network NW, such as the Internet.

The server 1 is an information processing device managed by the service provider. The server 1 executes various processes to implement the present service while communicating with the user terminal 2 as appropriate.

The user terminal 2 is an information processing device operated by the user. The user terminal 2 is made up of a smartphone, a tablet, a personal computer or the like.

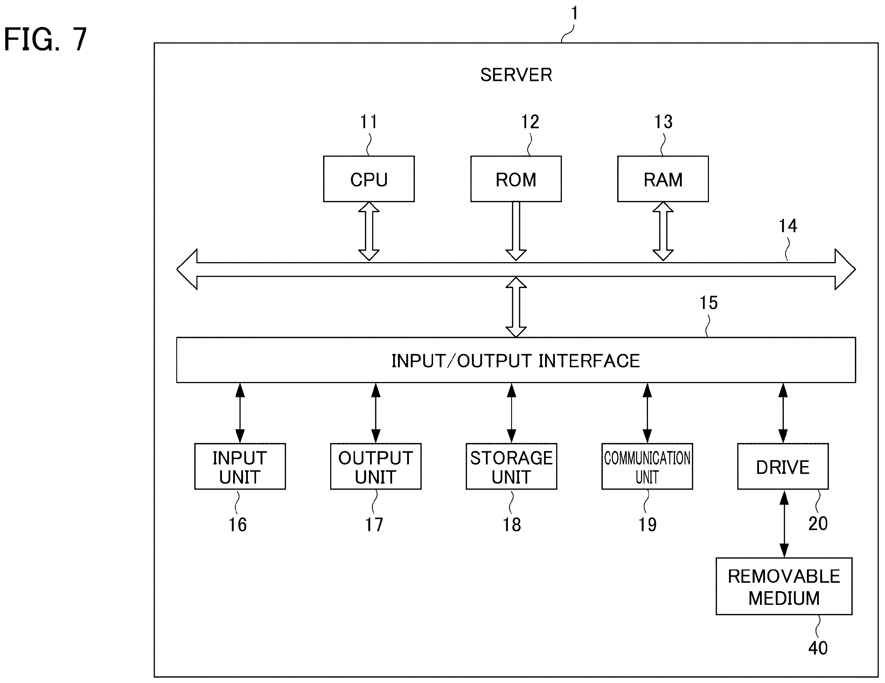

FIG. 7 is a block diagram showing an example of the hardware configuration of the server in the information processing system shown in FIG. 6.

The server 1 includes a CPU (Central Processing Unit) 11, a ROM (Read Only Memory) 12, a RAM (Random Access Memory) 13, a bus 14, an input/output interface 15, an input unit 16, an output unit 17, a storage unit 18, a communication unit 19, and a drive 20.

The CPU 11 executes various processes according to a program stored in the ROM 12, or a program loaded from the storage unit 18 into the RAM 13. The RAM 13 appropriately stores data and the like required by the CPU 11 to execute various processes.

The CPU 11, the ROM 12, and the RAM 13 are connected to each other via the bus 14. The input and output interface 15 is also connected to the bus 14. The input unit 16, the output unit 17, the storage unit 18, the communication unit 19, and the drive 20 are connected to the input/output interface 15.

The input unit 16 includes, for example, a keyboard and the like, and inputs various types of information. The output unit 17 includes a display such as of a liquid crystal, a speaker and the like, and outputs various types of information as images and audio. The storage unit 18 includes a DRAM (Dynamic Random Access Memory) and the like, and stores various data items. The communication unit 19 communicates with another device (e.g., the user terminal 2 in FIG. 4) via the network NW that includes the Internet.

A removable medium 40 made up of a magnetic disk, an optical disk, a magneto optical disk, a semiconductor memory or the like is attached to the drive 20 as appropriate. The program read from the removable medium 40 by the drive 20 is installed in the storage unit 18 as required. The removable medium 40 can also store various data items stored in the storage unit 18 in a manner similar to the storage unit 18.

Note that although not shown, the user terminal 2 in FIG. 6 may have a configuration basically similar to the hardware configuration of the hardware configuration shown in FIG. 7. Consequently, the description of the hardware configuration of the user terminal 2 is omitted.

Various types of hardware and various types of software that constitute the information processing system in FIG. 6 including the server 1 in FIG. 7 as described above cooperate with each other, which can execute various processes that include a question sentence dictionary generation process, a chat-type related text or the like extraction process, and a question sentence dictionary improvement process. As a result, the service provider can provide the user with the present service described above. The "question sentence dictionary generation process" is a process of generating the question sentence dictionary described above. The "chat-type related text or the like extraction process" is a process that chats with the user using the chat-type UI described above, and extracts the related text or the like using the question sentence dictionary described above, includes it in an answer for the user, and outputs the answer. The "question sentence dictionary improvement process" is a process to improve the question sentence dictionary described above.

FIG. 8 is a functional block diagram showing an example of a functional configuration for executing the question sentence dictionary generation process, the chat-type related text or the like extraction process, and the question sentence dictionary improvement process, in the functional configuration of the server in FIG. 7 included in the information processing system in FIG. 6.

As shown in FIG. 8, when the server 1 executes the question sentence dictionary generation process, a dictionary generation unit 101 functions in the CPU 11. When the server 1 executes the chat-type related text or the like extraction process, a keyword or the like acceptance unit 102, a question sentence candidate extraction unit 103, a question sentence candidate presentation unit 104, a question sentence determination unit 105, a related text or the like presentation unit 106, and a chat type UI control unit 109 function in the CPU 11. When the server 1 executes the question sentence dictionary improvement process, a history management unit 107 and a dictionary improvement unit 108 function in the CPU 11.

A question sentence dictionary DB 181 is provided in an area of the storage unit 18 of the server 1. The question sentence dictionary is stored in the question sentence dictionary DB 181.

The dictionary generation unit 101 stores the question sentence candidate including a word that is related to the entire related text or the like or its configuration element and is a keyword with higher generality, in the question sentence dictionary of the question sentence dictionary DB 181 in a manner where the keyword, the question sentence candidate, and the related text or the like are associated with each other so as to allow the question sentence candidate to be extracted upon input of the keyword. Accordingly, the question sentence dictionary that allows the user using the chat-type UI of the present service to easily reach desired information is generated.

The keyword or the like acceptance unit 102 accepts a keyword input in an input field of the chat-type UI. Here, the keyword input in the input field of the chat-type UI has a concept encompassing not only a case where the keyword itself is solely input into the input field, but also a case where the text including the keyword or its related word is input into the input field, and the keyword is extracted from the text by the chat type UI control unit 109 (AI chatbot). Specifically, for instance, in the aforementioned example in FIG. 1, only the keyword "delivery deadline" is input in the input field B1. Accordingly, the keyword or the like acceptance unit 102 accepts "delivery deadline". On the other hand, in the aforementioned example in FIG. 2, "Will delivery deadline be met" is input in the input field B1. As described later, the chat type UI control unit 109 (AI chatbot) extracts a word "*met" along with the "delivery deadline" from the text. The keyword or the like acceptance unit 102 then accepts "delivery deadline" and "*met". Here, "*" indicates that it can be replaced with any character string. For example, "will be met", "made to meet", "is not met" are encompassed by "*met".

The question sentence candidate extraction unit 103 extracts one or more question sentence candidates that at least partially include the keyword accepted by the keyword or the like acceptance unit 102, from the question sentence dictionary of the question sentence dictionary DB 181. For instance, in the example in FIG. 2, not only a question sentence candidate "I want to change order content (delivery deadline)" that includes "delivery deadline", but also a question sentence candidate "How about a case where the printed matter is incomplete, and reprinting cannot be made because the delivery deadline is not met?" that includes "delivery deadline" and "is not met", and a question sentence candidate "In how many business days should the shipment be made to meet the delivery deadline?" that includes "delivery deadline" and "made to meet" are extracted.

The question sentence candidate presentation unit 104 presents the user with one or more question sentence candidates extracted by the question sentence candidate extraction unit 103. Specifically, the question sentence candidate presentation unit 104 presents the user with one or more question sentence candidates (the question sentence candidate QK2 in the example in FIG. 2) extracted by the question sentence candidate extraction unit 103 by executing control of displaying it on the user terminal 2.

When one question sentence candidate is selected from among one or more question sentence candidates presented to the user by the question sentence candidate presentation unit 104, the question sentence determination unit 105 determines it as the question sentence from the user. Here, the selection of one question sentence candidate has a concept encompassing not only a case of explicit selection by an operation by the user, but also a case where the chat type UI control unit 109 (AI chatbot) predicts the intent based on the content input in the input field in the present service. For instance, in the example in FIG. 2, the user clicks a question sentence candidate "In how many business days should the shipment be made to meet the delivery deadline?" among the question sentence candidates QK2, thereby allowing the question sentence candidate to be determined. As shown in FIG. 3, when the user inputs and clicks "Will delivery deadline be met? Saturday", the chat type UI control unit 109 (AI chatbot) predicts the intent, and selects the question sentence candidate "In how many business days should the shipment be made to meet the delivery deadline?" from among the question sentence candidates QK2. The question sentence determination unit 105 then determines the question sentence candidate.

The related text or the like presentation unit 106 extracts the related text or the like associated with the question sentence determined by the question sentence determination unit 105, and presents it to the user via the chat type UI control unit 109 (AI chatbot). Here, the presentation to the user through the chat type UI control unit 109 (AI chatbot) has a concept that encompasses not only the presentation of related text or the like as it is, but also a case where the chat type UI control unit 109 (AI chatbot) processes the related text or the like and presents it, and a case where the chat type UI control unit 109 (AI chatbot) presents a text generated based on the related text or the like. For example, the answer to the FAQ "In how many business days should the shipment be made to meet the delivery deadline?" is "Products are shipped from the factory on the same day of acceptance at the earliest, and the delivery date is expected between 1 and 3 days after the shipment". It is assumed that the answer is extracted as the related text or the like. The content is included in the answer A1 from the chat type UI control unit 109 in the example in FIG. 3. Furthermore, in response to input of "delivery deadline" is "Saturday" by the user, through use of the echoing method described above, based on the related text or the like, the chat type UI control unit 109 (AI chatbot) creates a text "Today is Thursday. So, if acceptance is determined today, arrival may be in time on Saturday. Please see the FAQ for more information.", and
includes it in the answer A1. Consequently, the answer A1 in the example in FIG. 3 is an example of the related text or the like presented to the user through the chat type UI control unit 109 (AI chatbot).

The history management unit 107 manages the keyword accepted by the keyword or the like acceptance unit 102, the question sentence candidate selected from among one or more question sentence candidates presented to the user by the question sentence candidate presentation unit 104, and the related text or the like presented to the user by the related text or the like presentation unit 106 in response to the selection, as the history information. The history management unit 107 extracts the keyword which is a keyword accepted by the keyword or the like acceptance unit 102 and of which the related text or the like not selected by the user is not presented by the related text or the like presentation unit 106.

If the question sentence candidate by the question sentence candidate presentation unit 104 is presented as the history information to the user by the history management unit 107, and subsequently the determination by the question sentence determination unit 105 is not performed, the dictionary improvement unit 108 improves the question sentence dictionary that includes the correspondence relationship between the keyword included in the question sentence candidate and the question sentence candidate.

The chat type UI control unit 109 causes the user terminal to display the chat-type UI screen C and executes the control of causing the AI chatbot to chat (make conversation) with the user, and controls the transfer of information between the keyword or the like acceptance unit 102 to the related text or the like presentation unit 106 that establishes "keyword search type FAQ", and the AI chatbot, thereby allowing the AI chatbot to generate an appropriate answer based on the related text or the like (FAQ and its answer) serving as a target of presentation by the related text or the like presentation unit 106, with respect to the text that includes the keyword input by the user.

Here, as described above, the AI chatbot executes various processes until generation of the answer to the input by the user in the chat, based on the algorithm obtained by enhancing the conventional intent prediction search using machine learning.

For example, the AI chatbot extracts the keyword to be accepted by the keyword or the like acceptance unit 102, from the text input by the user. Specifically, for instance, in the aforementioned example in FIG. 2, "Will delivery deadline be met" is input in the input field B1. The AI chatbot extracts the word "*met" along with the "delivery deadline" from the text.

As a result, the question sentence candidate QK2 is displayed for the user by the question sentence candidate extraction unit 103, and the input text "Will delivery deadline be met? Saturday" is presented by the user to the AI chatbot (see the input field B1 as the history in the example in FIG. 3). The AI chatbot determines, as the question sentence, the question sentence candidate "In how many business days should the shipment be made to meet the delivery deadline?" among the question sentence candidates QK2 from the input text.

In response to the question sentence (FAQ), the answer "Products are shipped from the factory on the same day of acceptance at the earliest, and the delivery date is expected between 1 and 3 days after the shipment." is extracted as the related sentence or the like, and then the AI chatbot generates the answer A1 in the example in FIG. 3 based on the related sentence or the like while also referring to the input "Saturday" from the user (see the input field B1 as the history in the example in FIG. 3). That is, the AI chatbot creates the answer A1 in a natural sentence, as the text of a summary of the answer in response to the question from the user. As described above, the chatbot creates an answer so as not to include the related sentence or the like as it is, but also to include a text with consciousness of "echoing" that is a method of intent prediction search as much as possible, for the sake of reducing the burden of visual verification of search result appropriateness. In this example, the user asks "will it be in time for Saturday?". Accordingly, echoing representation "might be made in time on Saturday" is included at the end of the gist of answer of the answer A1.

Furthermore, the AI chatbot can execute various processes to generate the answer this time, on the basis not only of the content input by the user this time, but also of the content of the previous conversations (chats) and the history of processes by the keyword or the like acceptance unit 102 to the related text or the like presentation unit 106 based on the content of the previous conversations (chats). For example, it is assumed that subsequent to the example in FIG. 3 described above, as shown in FIG. 4, "What time do I have to submit the manuscript?" is input. In this case, since the aforementioned previous question and answer (see FIGS. 1 and 3) are stored, the AI chatbot can generate the answer A2 in the example in FIG. 4 by the algorithm obtained by enhancing the conventional intent prediction search using machine learning, in consideration of the assumption "Acceptance needs to be completed today".

Furthermore, if the chat-type UI screen C of the present service is embedded in the predetermined website (e.g., the case as in the example in FIG. 5), the AI chatbot can execute various processes to generate the answer this time, based not only on the content input by the user but also on the content of one or more web pages included in the website. For instance, in the example in FIG. 5, in a state where a page "A4-sized leaflets and flyers printing fee schedule" opens, the user inputs "Where is data to be entered?" in an input field B4 on the chat-type UI screen C, and presses the enter key. The AI chatbot then generates the answer A4 along the context "intent to print flyers" based on a page "A4-sized leaflets and flyers printing fee schedule". Note that what can be used as the context by the AI chatbot is not limited only to the page that currently opens. Pages previously viewed by the user can also be used in a similar manner.

As described above, the information processing device in FIG. 7 has the aforementioned functional configuration shown in FIG. 8. Accordingly, the user using the present service can easily reach the desired information, and can receive the desired information in a more appropriate form of a natural sentence.

It is further described below why unlike the conventional FAQ search site, the user using the chat-type UI of the present service to which the "keyword type FAQ" is applied can easily reach the desired information (desired FAQ and its answer).

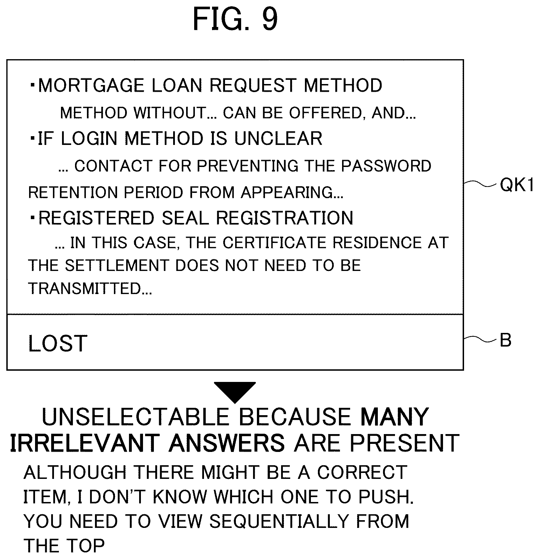

FIG. 9 is a diagram showing an example of a search at a FAQ search site according to a conventional approach. That is, according to the conventional approach, a character string based on an input by the user themself is accepted, pages (pieces of writing) of FAQs including the character string and their answer are assumed to be hit, and the list of the hit pages are presented to the user. The user is required to select the piece of writing assumed to be what the user themself intends to search for, from the list. However, typically, many pieces of writing including the character string (search keyword) input by the user are hit.

As a result, it is unselectable because many irrelevant answers are present. That is, there is a possibility that a correct answer (a piece of writing to be presented to the user) is present at any place on the list, but the user themself does not understand which piece of writing on the list is to be viewed. Accordingly, the user is required to sequentially check the list from the top (beginning).

As a result, nothing is listed in some cases. That is, pieces of writing that include the character string input by the user are listed. Accordingly, if the character string input by the user is not a term or the like used in the piece of writing, nothing is listed, and the user needs to reconsider it on their own and input another character string.

As descried above, in the case of assuming the conventional approach that lists the pieces of writing including the character string input by the user, the following measures can be considered. That is, it is conceivable that many pieces of writing are prepared. Specifically, for example, by replacing the word with another word, or preparing multiple patterns of pieces of writing with different viewpoints on the problem, a successful search can be achieved, even with an input of any character string by the user. However, such measures have a drawback that an entry is hit, but irrelevant pieces of writing are also hit. For example, multiple hits of similar pieces of writing (answers) are sometimes confusing. Also, the maintainability is degraded.

For example, conventionally, there is a method adopting an AI or the like that evaluates the relationship between the character string input by the user and the piece of writing to be presented to the user, without creating the list under a condition that the piece of writing includes the character string input by the user. If the conventional machine learning type AI is adopted, absence of a piece of writing to be hit becomes less likely. However, the problem that the list of hit pieces of writing include many pieces of writing that are not the piece of writing originally intended by the user is not resolved. In the case of adopting the conventional AI, the result of the piece of writing having high relationship is presented by the AI. However, an answer causing problems of compliance and business is sometimes provided. It is difficult to securely remove it. In the case of adopting the conventional AI, there is vulnerability to change in the service and business environment. That is, previous search results and the like are used for AI learning. Accordingly, when the number of specified queries increases, and the service, business environment, and the service itself change, it is difficult to address the situations in a short time. In the case of adopting the conventional AI, individual tuning for each search target (e.g., service) requires a large amount of data. Cleansing the large amount of data requires many engineering resources, which increases the cost.

Accordingly, the method of using the conventional approach, the conventional AI or the like is nothing less than evaluation of the relationship between the character string input by the user and the piece of writing (including evaluation of the relationship of whether the character string is simply included or not), and has the problem as described above. On the other hand, unlike the conventional FAQ search site described above, the user using the chat-type UI of the present service to which the "keyword type FAQ" is applied can easily reach the desired information (FAQ and its answer). The reason is described below.

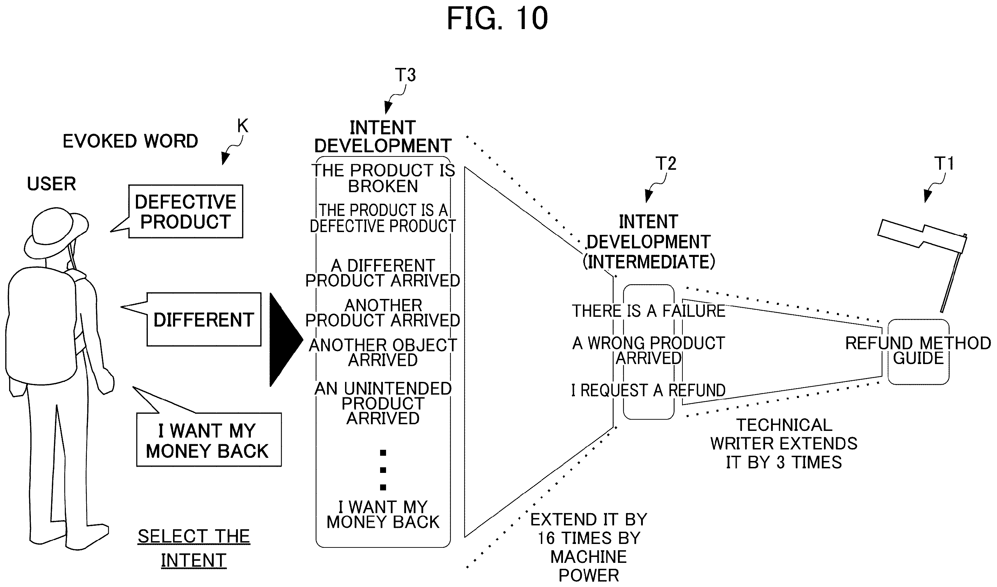

FIG. 10 is a diagram illustrating a concept of intent development in the present service. In the example in FIG. 10, a target text or the like T1 to be presented to the user serves as the piece of writing of the FAQ "Refund method guide" and its answer (related text or the like). Note that information actually presented to the user in the present service is not the piece of writing itself of the FAQ "Refund method guide" and its answer, but is information based on the FAQ and its answer. Here, "information based on the FAQ and its answer" has the following means. That is, since the present service uses the chat-type UI, "FAQ and its answer" is not presented as it is to the user, but an answer in a natural sentence generated by the AI chatbot is presented. The answer in the natural sentence generated by the AI chatbot is "information based on the FAQ and its answer". Note that for convenience of description, the description is made assuming that the target text or the like is presented to the user. Here, it can be said that the piece of writing (target text or the like) "Refund method guide" should be presented to a user of an online shopping site or the like "having trouble receiving a defective product", a user with "a product different from the ordered product arrived", or a user intending "I want my money back" due to a certain reason.

According to the present service, a technical writer extends the target text or the like T1 to the intent representation (intermediate) T2 (extended by 3 times in the example in FIG. 8). That is, the technical writer develops the representation in consideration of a certain intent of the user. That is, in FIG. 8, for example, the technical writer assumes a user having an intent to obtain an answer by communicating a fact "the product has a failure", and develops it. For example, the technical writer assumes a user having an intent to obtain an answer by communicating a fact "a wrong product arrived", and develops it. For example, they assume a user having an intent to obtain an answer by communication a wish "I request a refund" (solution), and develop it. As described above, in view of the intention of the user and the way of presentation of the piece of writing, the technical writer develops the target text or the like T1 to the intent representation (intermediate) T2.

Furthermore, the intent representation (intermediate) T2 is further extended by the server 1. That is, the server 1 extends the intent representation (intermediate) T2 to an intent representation T3 by the predetermined algorithm (extended by 16 times in the example in FIG. 8). Specifically, for example, as shown in FIG. 8, an intent representation (intermediate) T2 "There is a failure" is developed to "The product is broken", "The product is a defective product" and the like. That is, for example, the server 1 supplements a subject, replaces a word or phrase with a synonym or the like, and changes the combination of the suffix, adverb and the like to synonymous sentence, thus developing it. The intent representation T3 generated (developed) as described above is stored, as a question sentence candidate, in the question sentence dictionary DB 181 described above. Likewise, each of target texts or the like T1 is developed through the stages of the intent representation (intermediate) T2 and the intent representation T3, and what is developed is stored, as the question sentence candidate, in the question sentence dictionary DB 181 described above.

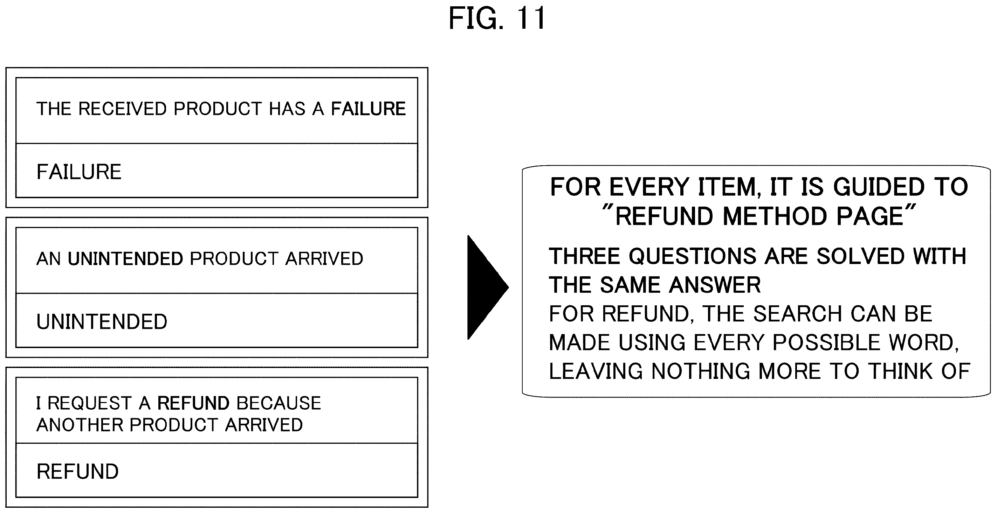

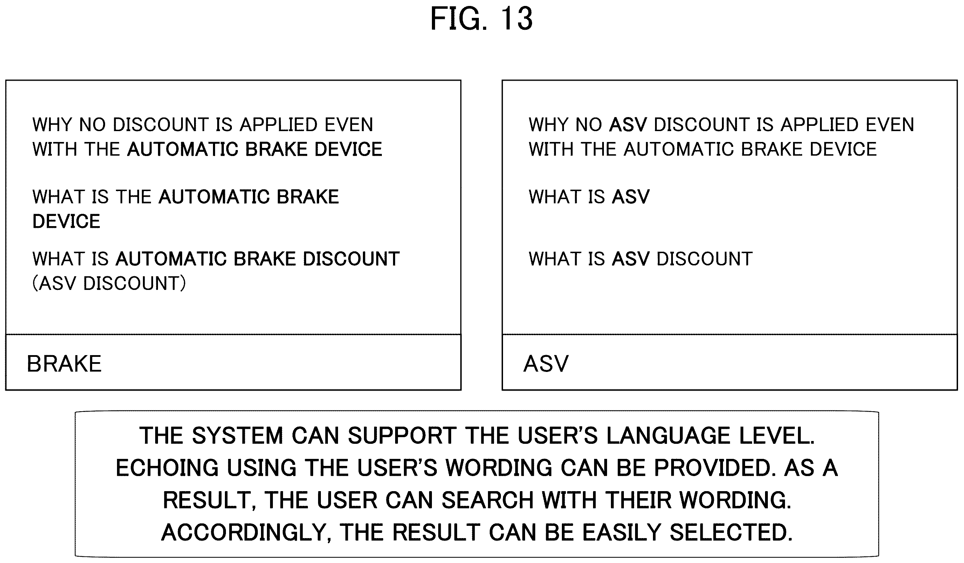

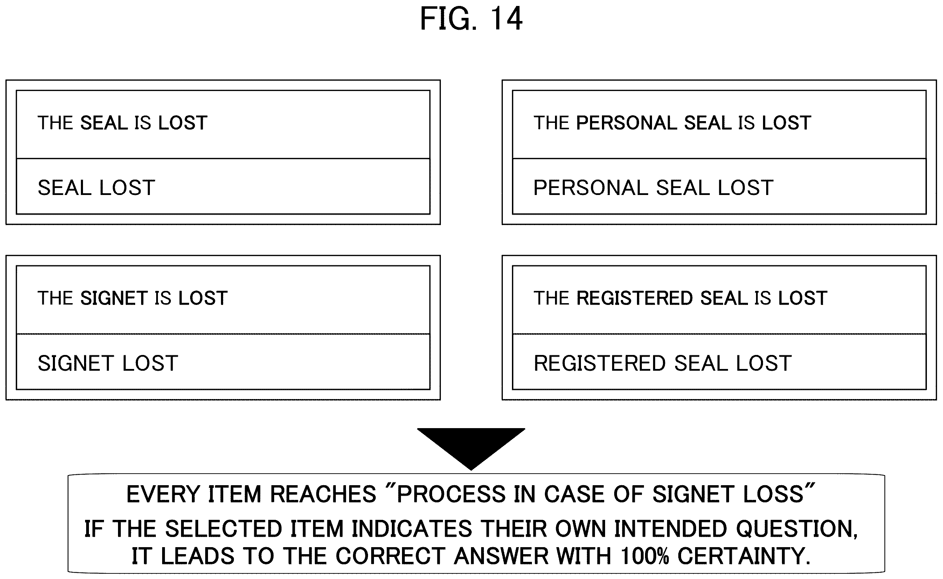

As a result, the user can perform a search as follows. FIG. 11 is a diagram showing an example of guidance for the user achieved by the intent development of the present service. That is, for example, as shown in FIG. 11, the user can perform a search by selecting and inputting an intent, such as "failure", "different", or "refund", as an evoked word (keyword). That is, for "certain piece of writing" (target text or the like), a plurality of questions (intent representation) are generated. Accordingly, the user can reach the piece of writing based on various expressions. Note that as shown in FIGS. 10 and 11, according to the present service, even if the keyword input by the user is different (e.g., the cases of difference, such as "defective product" and "failure", "different" and "wrong", and "I want my money back" and "refund"), the question sentence candidate appropriate for the user is presented to the user. This is described later with reference to FIGS. 13 and 14.

The intent development, which is one difference from the conventional FAQ search site, according to the present service has thus been described above. Other functions and the like of the present service that improve the usability of the user are described below.

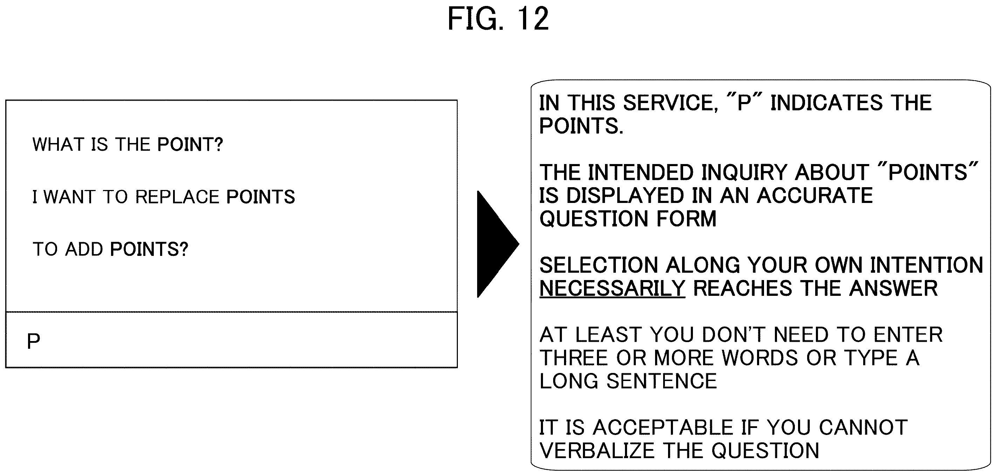

FIG. 12 is a diagram showing an example of guidance for the user achieved by the intent prediction of the present service. As shown in FIG. 12, the server 1 of the present service has a function of predicting the intent of the user only with an input of one character from the user. Accordingly, the user can check the question sentence candidates without inputting all question sentences (keywords). That is, the present service has a prediction function of predicting what keyword the user intends to input finally, from a character being input in the middle of the input of the keyword. The prediction function is adjusted depending on each service serving as a search target of the service. That is, for example, in a case of a FAQ search site of a service using a term "point", an input of "p" by the user allows a prediction that the keyword "point" is to be input. For example, in a case of a FAQ search site of a service using a term "portfolio", an input of "p" by the user allows a prediction that the keyword "portfolio" is to be input.

Note that even when the prediction function works, question sentence candidates including the keyword are presented to the user as described above. That is, typically, at the time when the user inputs the keyword "point", even a natural person cannot grasp an intent how the user intends to do with the point or the like. However, according to the present service, the question sentence candidate that includes the keyword is presented to the user. Accordingly, by selecting the question sentence candidate along the user's own intent, the answer can always be reached.

The characteristic that the question sentence candidate including the keyword input by the user is presented to the user is additionally described below. FIG. 13 is a diagram showing an example of presenting question sentence candidates in the present service. As shown in FIG. 13, when the keyword is input by the user, the question sentence candidate including the keyword is presented to the user. The user can check the target text or the like by selecting the question sentence candidate along their intention from among the presented question sentence candidates. The server 1 associates the definition and description sentence of each term, synonyms, paraphrases and the like with each other, stores them as a definition database, and manages them. Specifically, for example, in the example in FIG. 13, "automatic brake device" and "ASV" are associated with each other, and are stored as the definition database. When searching for the question sentence candidates based on the keyword input by the user, the server 1 searches for the question sentence candidate using the definition database, and presents it to the user. Accordingly, an intent development T3 "What is the automatic brake device" is hit. Here, if the user searches using a keyword "ASV", "automatic brake device" in the intent development T3 "What is the automatic brake device" is replaced with the word "ASV", and is presented as a question sentence candidate to the user. Accordingly, the user's wording is "necessarily" included in the question. Thus, the question sentence candidate without dependence on the user's search level is presented to the user. In other words, the system (server 1) can match the wording level to the user's, and present it as a question sentence candidate. With reference to the user's position, the user can search with their own wording, thus facilitating the selection from among the question sentence candidates. In other words, the question sentence candidate represented using the keyword input themself is presented, only by the user inputting the keyword, thus facilitating the selection from among the question sentence candidates.

FIG. 14 is a diagram showing an example of the user selecting the question sentence candidate in the present service. As shown in FIG. 14, the question sentence candidate that includes the keyword input by the user is presented to the user. Accordingly, as described with reference to FIG. 13, the user can search with their own wording. As a result of the selection of the question sentence candidate including the keyword input by themself, the user can reach the target text or the like corresponding to the question.

The description has been made above assuming that the target text or the like is the related text or the like that is the text (piece of writing) of the FAQ and its answer. As described above, the present service can apply the predetermined word, phrase, or text presented to the user to achieve the predetermined purpose of the user, as the target text.

That is, for example, the target text or the like may be a text describing the product (service). Specifically, for example, a financial service is preliminarily assumed, and the user is assumed to have an intent "there is a concern about children's education funding". In this case, the user inputs a keyword such as "children" into an input field displayed along with a text such as "what is your question?" displayed on a financial service site. As a result, "I want to prepare the children's education funding", "by what age are children eligible for OO" and the like are presented as the question sentence candidates to the user. Here, "OO" is the name of a service for preparing children's education funding, i.e., the service name of what is called educational insurance. Next, the user selects the question sentence candidate "I want to prepare the children's education funding" that has not been verbalized and input as a keyword yet, thereby allowing the user to view a page of product description of "OO" that is the educational insurance.

Note that the keyword and the question sentence candidate described above appropriately function for the user who is a user intending to use the OO service and has an intent "by what age are children eligible for". As described above, if product introduction is adopted as the target text or the like of the present service, the chat-type UI is not necessarily caused to function as part of the FAQ search site, and may be caused to function also as a page dedicated for product introduction. As described above, the present service can be applied not only to a FAQ, but also to a predetermined word, phrase, or text presented to the user to achieve the predetermined purpose of the user. In the embodiment described above, it is preliminarily assumed that the user intends to input their intent in the form of a question sentence, and it is further assumed that the keyword is to be input. However, what is presented to the user is not limited to the question sentence as long as it represents the intent by the user themself, and may be a guidance sentence desired (intended) by the user.

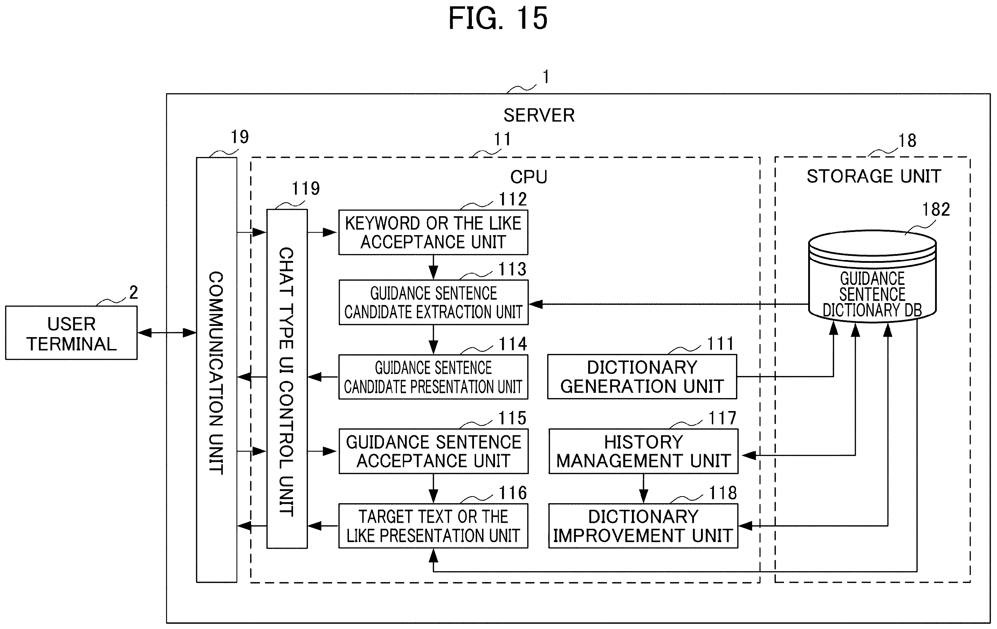

The functional configuration of the server 1 that presents a guidance sentence candidate, and the target text or the like, etc. is described with reference to FIG. 15. FIG. 15 is a functional block diagram showing an example of the functional configuration for executing a process of allowing the user to search for the target text or the like and presenting it, in the functional configuration of the server in FIG. 8.

As shown in FIG. 15, when the server 1 executes the guidance sentence dictionary generation process, a dictionary generation unit 111 functions in the CPU 11. When the server 1 executes a chat-type target text or the like extraction process, a keyword or the like acceptance unit 112, a guidance sentence candidate extraction unit 113, a guidance sentence candidate presentation unit 114, a guidance sentence acceptance unit 115, a target text or the like presentation unit 116, and a chat type UI control unit 119 function in the CPU 11. When the server 1 executes a guidance sentence dictionary improvement process, a history management unit 117 and a dictionary improvement unit 118 function in the CPU 11.

A guidance sentence dictionary DB 182 is provided in an area of the storage unit 18 of the server 1. The guidance sentence dictionary is stored in the guidance sentence dictionary DB 182.

The dictionary generation unit 111 stores the guidance sentence candidate including a word that is related to the entire target text or the like or its configuration element and is a keyword with higher generality, in the guidance sentence dictionary of the guidance sentence dictionary DB 182 in a manner where the keyword, the guidance sentence candidate, and the target text or the like are associated with each other so as to allow the guidance sentence candidate to be extracted upon input of the keyword. Accordingly, the guidance sentence dictionary for allowing the user searching for the target text or the like to easily reach the desired information is generated.

The keyword or the like acceptance unit 112 accepts a keyword K input into an input field of the chat-type UI. Specifically, for instance, in the example of the educational insurance described above, upon input of a word "children" or "education funding", or its synonym, the keyword or the like acceptance unit 112 accepts the keyword "children" or "education funding" via the chat type UI control unit 119 (AI chatbot).

The guidance sentence candidate extraction unit 113 extracts one or more guidance sentence candidates that at least partially include the keyword accepted by the keyword or the like acceptance unit 112, from the guidance sentence dictionary of the guidance sentence dictionary DB 181.

The guidance sentence candidate presentation unit 114 presents the user with one or more guidance sentence candidates extracted by the guidance sentence candidate extraction unit 113. Specifically, the guidance sentence candidate presentation unit 114 presents the user with one or more guidance sentence candidates extracted by the guidance sentence candidate extraction unit 113, by executing control of displaying it on the user terminal 2.

When one guidance sentence candidate is selected from among one or more guidance sentence candidates presented to the user by the guidance sentence candidate presentation unit 114, the guidance sentence acceptance unit 115 determines this as the guidance sentence from the user. Here, the selection of one guidance sentence candidate has a concept encompassing not only a case of explicit selection by an operation by the user, but also a case where the chat type UI control unit 119 (AI chatbot) predicts the intent based on the content input into the input field in the present service and selects it.

The target text or the like presentation unit 116 extracts the target text or the like associated with the guidance sentence determined by the guidance sentence acceptance unit 115, and presents it to the user via the chat type UI control unit 119 (AI chatbot). Here, the presentation to the user through the chat type UI control unit 119 (AI chatbot) has a concept that encompasses not only the presentation of target text or the like as it is, but also a case where the chat type UI control unit 119 (AI chatbot) processes the target text or the like and presents it, and a case where the chat type UI control unit 119 (AI chatbot) presents a text generated based on the target text or the like.

The history management unit 117 manages the keyword accepted by the keyword or the like acceptance unit 112, the guidance sentence candidate selected by the user from among one or more guidance sentence candidates presented to the user by the guidance sentence candidate presentation unit 114, and the target text or the like presented to the user by the target text or the like presentation unit 116 in response to the selection, as the history information. The history management unit 117 extracts the keyword which is a keyword accepted by the keyword or the like acceptance unit 112 and of which the target text or the like not selected by the user is not presented by the target text or the like presentation unit 116.

If the guidance sentence candidate by the guidance sentence candidate presentation unit 114 is presented as the history information to the user by the history management unit 117, and subsequently the determination by the guidance sentence acceptance unit 115 is not performed, the dictionary improvement unit 118 improves the guidance sentence dictionary that includes the correspondence relationship between the keyword included in the guidance sentence candidate and the guidance sentence candidate.

The chat type UI control unit 119 causes the user terminal to display the chat-type UI screen C and executes the control of causing the AI chatbot to chat (make conversation) with the user, and controls the transfer of information between the keyword or the like acceptance unit 112 to the target text or the like presentation unit 116 and the AI chatbot, thereby allowing the AI chatbot to generate an appropriate answer based on the target text or the like extracted by the target text or the like presentation unit 116 with respect to the text that includes the keyword input by the user.

The example of the functional configuration of the server 1 where the present service is applied not only to a FAQ but also to the target text or the like including the product description has thus been described above. The characteristics of the present service implemented by the server 1 described above are summarized below.

The search using the intent development of the present service can be regarded as a search method fitting well with the behavioral characteristics of the user. Specifically, the user is not experienced with the product (service) and the like of the search target. Consequently, they do not understand technical terms used typically for FAQ and product description in many cases. That is, a keyword for a search using such a technical term cannot be evoked. Furthermore, even in a case of input as a keyword, it is difficult to select what is correct from among pieces of writing that simply include the keyword (whether it matches the user's own intent). In actuality, many users give up if several (about three on average) trials cannot reach their intended target texts or the like. As described above, the present service can solve such a problem.

The search using the intent development of the present service can be regarded as a mechanism that does not search the target text or the like serving as the answer based on the keyword input by the user, but searches the predicted guidance sentence (question sentence) instead. Specifically, it is difficult for the user to select an appropriate answer even if the answer (target text or the like) that the user intends to know thereafter is presented. According to the present service, the question (guidance sentence) that the user themself considers is presented. Accordingly, the user easily makes the selection. Accordingly, improvement in the user's correct answer rate can be achieved.

The one embodiment of the present embodiment has thus been described above. However, the present invention is not limited to the embodiment described above. Modifications, improvements and the like in a range capable of achieving the object of the present invention are assumed to be encompassed in the present invention.

For example, in the embodiment described above, the related text or the like that is an example of the target text or the like is assumed as an answer to one FAQ, but may be answers to two or more FAQs instead.

For example, there is no limitation to the specific examples described above. For example, it is assumed that a wrong payment process is performed for three users using online payment. In this case, each of the three users inputs natural sentences and the like that each include keywords "failure", "I want my money back", and "defect", in the chat-type UI screen C of the present service, and selects the displayed question sentence candidates (including a case where the AI chatbot predicts the intent and performs the selection). Accordingly, the answer to the same FAQ desired by the three users are extracted as the related text or the like, and texts based on the same related text or the like are presented to each of the three users. Note that the texts respectively presented to the three users are based on the same related text or the like. However, the texts are generated by the AI chatbot depending on the histories of chats (conversations) of the three users. Accordingly, the texts are typically different among the three users.

For example, in the embodiment described above, a question sentence candidate including a word that is related to a predetermined word, phrase, or text and has higher generality is extracted when the word is input. However, there is no limitation to this. It may be configured such that a question sentence candidate including a word related to the predetermined word, phrase, or text and has lower or equivalent generality is extracted when the word is input. Specifically, for example, it may be configured such that upon input of a word "erase" into the search window, a text including a word "remove" is extracted.

The system configuration shown in FIG. 6, and the hardware configuration of the server 1 shown in FIG. 7 are only examples to achieve the object of the present invention. There is no limitation to this.

The functional block diagrams shown in FIGS. 8 and 15 are only examples. There is no limitation to this. That is, it is only required that functions that can execute the aforementioned various processes as a whole are provided for the information processing system in FIG. 6. Specific use of functional blocks and database to implement the functions are not specifically limited to the examples shown in FIGS. 8 and 15.

Locations where the functional blocks and databases reside are not specifically limited to those in FIGS. 8 and 15, and may be freely defined. For example, a configuration may be adopted where at least part of the functional blocks and databases arranged in the server 1 are included in the user terminal 2 or another information processing device, not shown.

The series of processes described above may be executed by hardware or executed by software. One functional block may be made up of a single piece of hardware, a single piece of software, or a combination of them.

In the case where the series of processes are executed by software, a program constituting the software is installed into a computer or the like through a network or from a recording medium. The computer may be a computer implemented in dedicated hardware. The computer may be a computer that can execute various functions by installing various programs, for example, a general-purpose smartphone or a personal computer instead of or besides the server.

A recording medium that includes such programs is made up not only of a removable medium that is not shown, separated from the device itself, and is distributed to provide the user with the programs, but also of a recording medium or the like that is provided for the user in a state of being preliminarily implemented in the device itself.

Note that in the present Description, steps describing the program recorded in the recording medium include not only processes to be performed on a time-series basis according to their order, but also processes executed in parallel or individually without being necessarily performed sequentially.

In summary, it is sufficient that the information processing device to which the present invention is applied has the following configuration, and this device can be implemented in various types of embodiments. That is, it is sufficient that the information processing device to which the present invention is applied includes:
acceptance unit (e.g., the keyword or the like acceptance unit 102 in FIG. 8, or the keyword or the like acceptance unit 112 in FIG. 15) for accepting a word (e.g., a keyword) related to a target text or the like (e.g., related text or the like of an answer or the like to a FAQ) that is a prescribed word, phrase, or text to be presented to a user to achieve a predetermined object of the user;
extraction unit (e.g., a question sentence candidate extraction unit 103 in FIG. 8 or a guidance sentence candidate extraction unit 113 in FIG. 15) for extracting one or more guidance sentence candidates (e.g., a question sentence candidate) that at least partially include the word or a word similar thereto from a guidance sentence dictionary (e.g., a question sentence dictionary DB 181 in FIG. 8 or a guidance sentence dictionary DB 182 in FIG. 15) in which a plurality of guidance sentence candidates (e.g., FAQ question sentence candidates) intended by the user to reach the target text or
the like are preregistered in association with the target text or the like;
first presentation unit (e.g., a question sentence candidate presentation unit 104 in FIG. 8 or a guidance sentence candidate presentation unit 114 in FIG. 15) for presenting, to the user, the one or more question sentence candidates extracted by the extraction unit (e.g., presentation as a question sentence candidate QK1 in FIG. 1);
second presentation unit (e.g., a related text or the like presentation unit 106 in FIG. 8, or e.g., a target text or the like presentation unit 116 in FIG. 15) for extracting the target text or the like associated with the selected guidance sentence candidate among the one or more guidance sentence candidates presented to the user by the first presentation unit, from the guidance sentence dictionary, and for presenting the extracted target text or the like to the user; and
chat control unit (e.g., a chat type UI control unit 109 in FIG. 8 or a chat type UI control unit 119 in FIG. 15) for causing a chatbot to execute control to chat with the user (e.g., as shown in FIGS. 1 to 5, causing the user terminal 2 to display a chat-type UI screen C), and for controlling transfer of information between the acceptance unit to the second presentation unit and the chatbot to thereby cause the chatbot to generate an answer (e.g., an answer A1 in FIG. 3) based on the target text or the like that is a presentation target by the second presentation unit, in response to a text (e.g., a text input into an input field B1 in FIG. 3) input by the user. For example, it may be configured such that the guidance sentence candidates are question sentence candidates, and the guidance sentence dictionary is a question sentence dictionary.

Accordingly, the user can easily reach a desired target text or the like through a chat, and obtain an appropriate answer based on the target text or the like.

It may be configured such that the chatbot executes one or more processes until generating the answer in response to the input by the user in the chat, based on an intent prediction search algorithm generated using predetermined machine learning. Accordingly, for example, with respect to the content input in the input field B1 in the example in FIG. 3, the answer A1 in the example in FIG. 3 can be presented to the user.

The chatbot can execute the one or more processes that include a process of extracting the word to be accepted by the acceptance unit, based on input content by the user. For instance, in the example in FIG. 2, the text "Will delivery deadline be met" is input in the input field B1. The AI chatbot can extract the word "*met" along with the "delivery deadline" from the text.

The chatbot can execute the one or more processes including a process of extracting the word to be accepted by the acceptance unit, based on the input content by the user this time, and further on content of previous chats, and a history of processes by the acceptance unit to the second presentation unit based on the previous chats. For example, it is assumed that subsequent to the example in FIG. 3, as shown in FIG. 4, "What time do I have to submit the manuscript?" is input. In this case, since the aforementioned previous question and answer (see FIGS. 1 and 3) are stored, the AI chatbot can generate the answer A2 in the example in FIG. 4 in consideration of the assumption "Acceptance needs to be completed today".

The chatbot is embedded in a predetermined website, and can execute the one or more processes that include the process of extracting the word to be accepted by the acceptance unit, based on input content by the user this time and further on content of one or more web pages included in the website. For instance, in the example in FIG. 5, in a state where a page "A4-sized leaflets and flyers printing fee schedule" opens, the user inputs "Where is data to be entered?" in an input field B4 on the chat-type UI screen C, and presses the enter key. The AI chatbot then generates the answer A4 along the context "intent to print flyers" based on a page "A4-sized leaflets and flyers printing fee schedule".

### EXPLANATION OF REFERENCE NUMERALS

1...Server, 2...User terminal, 11...CPU, 12...ROM, 13...RAM, 14...Bus, 15... Input/output interface, 16... Input unit, 17... Output unit, 18...Storage unit, 19...Communication unit, 20...Drive, 40...Removable media, 101...Dictionary generation unit, 102...Keyword or the like acceptance unit, 103...Question sentence candidate extraction unit, 104...Question sentence candidate presentation unit, 105...Question sentence determination unit, 106...Related text or the like presentation unit, 107...History management unit, 108... Dictionary improvement unit, 109...Chat type UI control unit, 111... Dictionary generation unit, 112...Keyword or the like acceptance unit, 113...Guidance sentence candidate extraction unit, 114...Guidance sentence candidate presentation unit, 115...Guidance sentence acceptance unit, 116...Target text or the like presentation unit, 117...History management unit, 118...Dictionary improvement unit, 119...Chat type UI control unit, 181...Question sentence dictionary DB, 182...Question sentence dictionary DB

## Claims

1. An information processing device, comprising:
acceptance unit for accepting, as a target text or the like, a word related to the target text or the like that is a prescribed word, phrase, or text to be presented to a user to achieve a predetermined object of the user;
extraction unit for extracting one or more guidance sentence candidates that at least partially include the word or a word similar thereto from a guidance sentence dictionary in which a plurality of guidance sentence candidates intended by the user to reach the target text or the like are preregistered in association with the target text or the like;
first presentation unit for presenting, to the user, the one or more guidance sentence candidates extracted by the extraction unit;
second presentation unit for extracting the target text or the like associated with the selected guidance sentence candidate among the one or more guidance sentence candidates presented to the user by the first presentation unit, from the guidance sentence dictionary, and for presenting the extracted target text or the like to the user; and
chat control unit for causing a chatbot to execute control to chat with the user, and for controlling transfer of information between the acceptance unit to the second presentation unit and the chatbot to thereby cause the chatbot to generate an answer based on the target text or the like that is a presentation target by the second presentation unit, in response to a text input by the user.

2. The information processing device according to claim 1, wherein the guidance sentence candidates are question sentence candidates, and the guidance sentence dictionary is a question sentence dictionary.

3. The information processing device according to claim 1, wherein the chatbot executes one or more processes until generating the answer in response to the input by the user in the chat, based on an intent prediction search algorithm generated using predetermined machine learning.

4. The information processing device according to claim 3, wherein the chatbot executes the one or more processes that include a process of extracting the word to be accepted by the acceptance unit, based on input content by the user.

5. The information processing device according to claim 4, wherein the chatbot executes the one or more processes including a process of extracting the word to be accepted by the acceptance unit, based on the input content by the user this time, and further on content of previous chats, and a history of processes by the acceptance unit to the second presentation unit based on the previous chats.

6. The information processing device according to claim 4, wherein the chatbot is embedded in a predetermined website, and executes the one or more processes that include the process of extracting the word to be accepted by the acceptance unit, based on input content by the user this time and further on content of one or more web pages included in the website.

7. An information processing method executed by an information processing device, the method comprising:
an acceptance step of accepting, as a target text or the like, a word related to the target text or the like that is a prescribed word, phrase, or text to be presented to a user to achieve a predetermined object of the user;
an extraction step of extracting one or more guidance sentence candidates that at least partially include the word or a word similar thereto from a guidance sentence dictionary in which a plurality of guidance sentence candidates intended by the user to reach the target text or the like are preregistered in association with the target text or the like;
a first presentation step of presenting, to the user, the one or more guidance sentence candidates extracted by the extraction step;
a second presentation step of extracting the target text or the like associated with the selected guidance sentence candidate among the one or more guidance sentence candidates presented to the user by the first presentation step, from the guidance sentence dictionary, and of presenting the extracted target text or the like to the user; and
a chat control step of causing a chatbot to execute control to chat with the user, and of controlling transfer of information between the acceptance step to the second presentation step and the chatbot to thereby cause the chatbot to generate an answer based on the target text or the like that is a presentation target by the second presentation step, in response to a text input by the user.

8. A program causing a computer to execute a control process that includes:
an acceptance step of accepting, as a target text or the like, a word related to the target text or the like that is a prescribed word, phrase, or text to be presented to a user to achieve a predetermined object of the user;
an extraction step of extracting one or more guidance sentence candidates that at least partially include the word or a word similar thereto from a guidance sentence dictionary in which a plurality of guidance sentence candidates intended by the user to reach the target text or the like are preregistered in association with the target text or the like;
a first presentation step of presenting, to the user, the one or more guidance sentence candidates extracted by the extraction step;
a second presentation step of extracting the target text or the like associated with the selected guidance sentence candidate among the one or more guidance sentence candidates presented to the user by the first presentation step, from the guidance sentence dictionary, and of presenting the extracted target text or the like to the user; and
a chat control step of causing a chatbot to execute control to chat with the user, and of controlling transfer of information between the acceptance step to the second presentation step and the chatbot to thereby cause the chatbot to generate an answer based on the target text or the like that is a presentation target by the second presentation step, in response to a text input by the user.
